# EUROPEAN PATENT SPECIFICATION

(11) **EP 1 824 640 B1**
(45) Date of publication and mention of the grant of the patent: **19.08.2009**
(21) Application number: 05791896.3
(22) Date of filing: 09.09.2005
(51) Int. Cl.: B24D 5/06, B23C 5/04, B24D 5/10

(54) **TOOL PARTICULARLY FOR MILLING OPERATIONS**
INSBESONDERE FÜR FRÄSPROZESSE BESTIMMTES WERKZEUG
OUTIL PARTICULIÈREMENT POUR LES OPÉRATIONS DE FRAISAGE

(30) Priority: 22.09.2004 IT PD20040232
(43) Date of publication of application: 29.08.2007
(73) Proprietor: Adi S.p.A., 36016 Thiene(VI) (IT)
(72) Inventor: ZANDONELLA NECCA, Dino, I-36100 Vicenza (IT); GONZO, Ferruccio, I-36033 Isola Vicentina (VI) (IT)
(74) Representative: Cantaluppi, Stefano
(86) International application number: PCT/EP2005/009708
(87) International publication number: WO 2006/032382

(56) References cited:
- BE-A- 639 586
- DE-A1- 3 415 498
- US-A- 4 581 798
- US-B1- 6 478 021
- PATENT ABSTRACTS OF JAPAN vol. 1996, no. 02, 29 February 1996 (1996-02-29) & JP 07 276243 A (KURENOOTON KK; others: 01), 24 October 1995 (1995-10-24)

## Description

### Technical field

The present invention relates to a tool, particularly for milling operations, having the characteristics set out in the preamble to the main claim.

### Technological background

In this particular technical area, there are known milling tools comprising a core on which sectors of abrasive material are provided, typically arranged at a regular angular pitch around the core.

When the above-mentioned tools are used, to ensure adequate dissipation of the heat produced in the milling operation as a result of the contact between the abrasive sectors and the surfaces of the workpiece, typically provision is made to use cooling fluids conveyed to the areas being machined. According to a known solution, the core of the tool is provided with a plurality of holes extending radially from the outer casing of the core in the direction of its main axis and also positioned in the portions of core located between pairs of abrasive elements adjacent to each other. When the above-mentioned holes are in such a configuration, the cooling fluid is taken from the inside of the core into the length occupied by the abrasive elements so as in this way to obtain a consequently greater cooling effect.

Such a solution does however have some limitations, due mainly to the fact that the presence of the holes in the core entails structural discontinuities in the core such as to generate localized increases in the state of stress induced in the tool by machining forces, which may compromise the tool structurally, typically generating fatigue fractures.

Moreover, the presence of a plurality of holes for the cooling fluid to pass through introduces a discontinuity in the cooling of the tool along the core, this being greatest at the holes but characterized by thermal gradients in the areas comprised between adjacent holes. US 4,581,798 discloses a rice-cleaning roller of a grinding type with the features of the preamble of claim 1

### Description of the invention

The problem addressed by the present invention is that of providing a tool, particularly for milling operations, designed structurally and operationally to overcome the unwelcome limits noted with reference to the known technology first cited.

This problem is solved by the invention by means of a tool, particularly for milling operations, produced according to the claims which follow.

### Brief description of the drawings

Other characteristics and advantages of the invention will become clear from the following detailed description of a preferred embodiment illustrated purely by way of non-limiting example with reference to the appended drawings in which:
- figure 1 is a perspective view of a tool produced according to the invention,
- figure 2 is a view in side elevation of the tool in figure 1,
- figure 3 is a view in front elevation of the tool in the preceding drawings,
- figure 4 is a view of the tool disclosed by the invention in side elevation and partly in section along the lines IV-IV in figure 3.

### Preferred embodiments of the invention

With reference to the drawings cited, the number 1 is used to indicate as a whole a tool for milling operations produced according to the invention.

The tool 1 is arranged to be driven in rotation about its main axis, indicated by X in the drawings, and comprises a cylindrical core 2 extending coaxially with this axis. The core 2 is continued, at the end axially opposite its free end 2a, to form a shank 3, having a diameter greater than the core, arranged for fitting the tool 1 to a tool-holder, not shown. For this purpose, the shank formation 3 is in turn continued to form an externally threaded cylindrical pin 4, arranged to be fitted by screwing into the tool-holder. The number 5 indicates a flat surface obtained by producing flats on part of the casing of the core 3, which are used to lock the tool 1 torsionally in the relevant tool-holder.

The core 2 is also provided with a plurality of abrasive elements (set with diamond particles, for example), all indicated by the number 6, which extend from the core 2 (fixed to it by bonding, for example, or by brazing or other form of mechanical attachment) radially to the axis X and also spaced apart from each other angularly at a regular pitch.

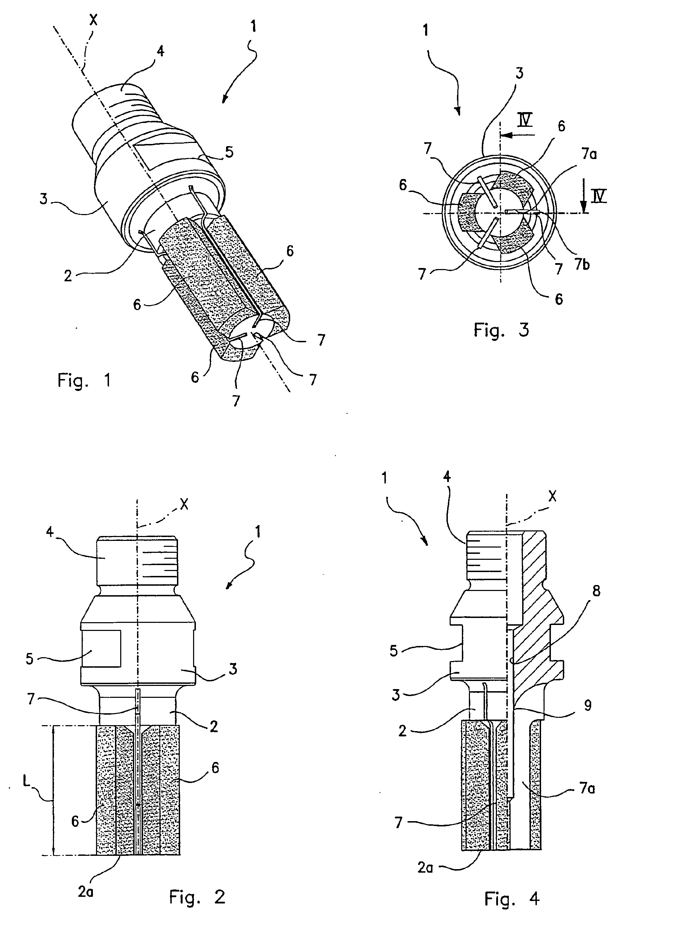

More particularly, three abrasive elements 6 are provided, spaced apart angularly at a pitch of 120° about the axis X, which have respective cross-sections shaped as portions of an annular sector extending radially from the cylindrical casing of the core 2, as shown clearly in figure 2. Each respective abrasive element 6 also extends axially, along the axis X, for the greater part of the longitudinal extent of the core 2, from the end 2a of this, indicated by the letter L in figure 1.

According to a principal characteristic of the invention, between each pair of adjacent abrasive elements 6, a gap 7 in the form of a cut is provided, extending radially in the core 2 to a predefined distance from the axis X. As can be seen from figure 2, each pair of adjacent abrasive elements 6 is arranged in a symmetrical position relative to a centrally positioned plane which identifies the corresponding cut 7 formed between these, in such a way that the cuts 7 are therefore arranged, transversely to the axis X, at 120° from each other, in a centred configuration relative to the arrangement of the abrasive elements 6.

Preferably each gap 7 in the form of a cut is open in the outer casing of the core 2 to extend radially to a predefined and common distance from the axis X. Each cut 7 also extends axially for the entire longitudinal extent of the core 2, from the end 2a, until it ends in the vicinity of the shoulder surface formed between the core 2 and the shank 3.

Each cut 7 is also identified by a pair of flat surfaces 7a, 7b, parallel and facing each other a short distance apart, which are joined at the bottom of the corresponding cut. This distance, the radial depth and the longitudinal position of the cut are selected so as to provide a passage inside them for cooling fluid capable of forming a continuous and homogeneous layer of fluid to coat the part of the abrasive elements 6 in contact with the workpiece.

The number 8 indicates an axial hole made in the tool, coaxially with the axis X and extending from the end 2a to a predefined distance from the opposite axial end. As shown in figure 4, the hole 8 is in fluid communication with each of the cuts 7 at a respective section 9 forming a through passage. Each of the sections 9 is formed by the intersection of the hole 8 with the corresponding cut 7 and its longitudinal extension may be predefined according to the axial depth selected for the hole 8 in the core 2. The value assigned to this extension controls the amount of fluid which is conveyed to the cuts 7 through the axial hole 8 during mechanical machining operations carried out with the tool, depending on the specific requirements. In any case the fluid fed through each section 9 is delivered in the form of a fluid layer to coat the corresponding abrasive element 6 over its entire longitudinal extension, independently of the size chosen for the section 9 forming a through passage.

It should be noted how easily each of the gaps 7 in the form of a cut in the core 2 can be produced, in particular with a single cutting operation on the core 2 compared with the greater complexity of known solutions which provide for multiple drilling of the core. This advantageously allows an appreciable reduction in the manufacturing times for the tool.

A further advantage lies in the fact that the provision of the gaps in the form of a cut in the tool according to the invention entails a reduction in the stress concentrations in areas in which the highest loads are applied to the tool, where known solutions, on the contrary, provide a plurality of holes with consequent generation of stress peaks at each individual hole.

The provision of such gaps in the form of a cut and consequently the generation of continuous layers of cooling fluid also advantageously enable a cooling effect to be obtained with no break in continuity along the core, compared with the discontinuous cooling effect obtainable with the multiple hole configurations proposed by the known technology.

The invention thus solves the problem stated and secures the advantages referred to above compared with known solutions.

## Claims

1. A tool, particularly for milling operations, capable of being: driven in rotation about its own main axis (X) and comprising a core (2) provided with a plurality of abrasive elements (6) extending from said core radially to said axis and spaced apart from each other angularly, at least one respective gap in the form of a cut (7) being provided between at least one pair of abrasive elements (6) adjacent to each other, said gap extending radially in said core (2) to a predefined distance from said axis (X), the tool comprising an outer casing with the at least one gap in the form of a cut (7) open at the outer casing of the core (2) along a length of the at least one pair of abrasive elements (6), a hole (8) coaxial with the axis and extending to a predefined distance from the axial end of the core (2) occupied by the abrasive elements (6), and in which the at least one gap in the form of a cut (7) is in fluid communication with the hole (8) in the core (2), **characterized in** comprising a section (9), radially extending directly in the core (2) between the hole and the at least one gap in the form of a cut (7), through which cooling fluid passes to convey the cooling fluid fed through the hole (8) over the abrasive elements (6) at the surfaces of the work piece.

2. A tool according to claim 1, in which said at least one gap in the form of a cut (2) extends axially in the core (2) along at least part of the axial length of said core provided with said abrasive elements (6).

3. A tool according to claim 1 or 2, in which between each pair of abrasive elements (6) adjacent to each other there is provided a respective gap in the form of a cut (7), each of said gaps in the form of a cut (2) extending radially in said core (2) to a predefined distance from said axis and axially for at least a length of the core provided with said abrasive elements (6).

4. A tool according to claim 3, in which said gaps in the form of a cut are open at the outer casing of said core.

5. A tool according to claim 1, in which the longitudinal extension, along said axis (X), of each section (9) forming a through passage is predefined according to the axial depth selected for said hole (8) inside the core (2), each section (9) being thereby formed by the intersection of the hole (8) with the corresponding gap in the form of a cut(7).

6. A tool according to any one of claims 3 to 5, in which each of said gaps in the form of a cut (7) is bounded by a pair of flat surfaces (7a,7b), parallel and facing each other a short distance apart.

7. A tool according to one of claims 3 to 6, in which are provided three respective gaps in the form of a cut (7) arranged in the core (2) at a regular angular pitch of 120°.

8. A tool according to one of the preceding claims, in which said abrasive elements (6) comprise portions of annular sectors of abrasive material fixed to the outer casing of said core (2).

9. A tool according to one of the preceding claims, comprising means of attachment (4,5) to a respective tool-holder.

## Patentansprüche

1. Werkzeug, insbesondere zum Fräsen, das über seine eigene Hauptachse (X) zur Drehung angetrieben werden kann und umfassend:
ein Kernstück (2) mit einer Vielzahl von Schleifelementen (6), die sich radial vom Kernstück zur Achse erstrecken und winkelig voneinander beabstandet sind, wobei zumindest jeweils ein Spalt in der Form eines Einschnitts (7) zwischen zumindest einem Paar von nebeneinander liegenden Schleifelementen (6) vorgesehen ist, wobei sich der Spalt radial in dem Kernstück (2) bis zu einem vorbestimmten Abstand von der Achse (X) erstreckt, wobei das Werkzeug ein Außengehäuse umfasst, wobei der zumindest eine Spalt in der Form eines Einschnitts (7) am Außengehäuse des Kernstücks (2) entlang einer Länge des zumindest einen Paars von Schleifelementen (6) offen ist,
ein Loch (8), das koaxial zur Achse ist und sich bis zu einem vorbestimmten Abstand vom axialen Ende des Kernstücks (1) erstreckt, das von den Schleifelementen (6) belegt ist,
und bei dem der zumindest eine Spalt in der Form eines Einschnitts (7) in Fluidverbindung mit dem Loch in dem Kernstück (2) ist,
**dadurch gekennzeichnet, dass** es einen Abschnitt (9) umfasst, der sich radial direkt in dem Kernstück (2) zwischen dem Loch (8) und dem zumindest einen Spalt in der Form eines Einschnitts (7) erstreckt, durch den Kühlfluid hindurch läuft, um das durch das Loch (8) zugeführte Kühlfluid über die Schleifelemente an den Oberflächen des Werkstücks zu leiten.

2. Werkzeug nach Anspruch 1, bei dem sich der zumindest eine Spalt in der Form eines Einschnitts (7) axial in dem Kernstück (2) entlang zumindest eines Teils der axialen Länge des Kernstücks, das mit den Schleifelementen (6) versehen ist, erstreckt.

3. Werkzeug nach Anspruch 1 oder 2, bei dem zwischen jedem nebeneinander liegenden Paar von Schleifelementen (6) jeweils ein Spalt in der Form eines Einschnitts (7) vorgesehen ist, wobei sich jeder Spalt in der Form eines Einschnitts (7) radial in dem Kernstück (2) bis zu einem vorbestimmten Abstand von der Achse und axial über zumindest eine Länge des Kernstücks, das mit den Schleifelementen (6) versehen ist, erstreckt.

4. Werkzeug nach Anspruch 3, bei dem die Spalte in der Form eines Einschnitts am Außengehäuse des Kernstücks offen sind.

5. Werkzeug nach Anspruch 1, bei dem die Längserstreckung entlang der Achse (X) jedes Abschnitts (9), der einen Durchgang bildet, gemäß der axialen Tiefe, die für das Loch (8) in dem Kernstück (2) ausgewählt wird, vordefiniert ist, wobei jeder Abschnitt (9) somit durch den Schnittpunkt des Lochs (8) mit dem entsprechenden Spalt in der Form eines Einschnitts (7) gebildet wird:

6. Werkzeug nach einem der Ansprüche 3 bis 5, bei dem jeder der Spalte in der Form eines Einschnitts (7) durch ein Paar von flachen Oberflächen (7a, 7b), die parallel sind und die einander mit einem kurzen Abstand dazwischen zugewandt sind, eingegrenzt ist.

7. Werkzeug nach einem der Ansprüche 3 bis 6, bei dem jeweils drei Spalte in der Form eines Einschnitts (7) in dem Kernstück (2) mit einem regelmäßigen winkeligen Abstand von 120° angeordnet sind,

8. Werkzeug nach einem der vorstehenden Ansprüche, bei dem die Schleifelemente (6) Bereiche von ringförmigen Sektoren des Schleifmaterials umfassend, das am Außengehäuse des Kernstücks (2) befestigt ist.

9. Werkzeug nach einem der vorstehenden Ansprüche, umfassend eine Einrichtung (4, 5) zur Befestigung an einem entsprechenden Werkzeughalter.

## Revendications

1. Outil, en particulier pour des opérations de fraisage, capable d'être entraîné en rotation autour de son propre axe principal (X) et comprenant un noyau (2) pourvu d'une pluralité d'éléments abrasifs (6) s'étendant dudit noyau radialement vers ledit axe et séparés les uns des autres angulairement, au moins un espace respectif sous la forme d'une découpe (7) étant prévu entre au moins une paire d'éléments abrasifs (6) adjacents l'un à l'autre, ledit espace s'étendant radialement dans ledit noyau (2) à une distance prédéfinie dudit axe (X), l'outil comprenant une enveloppe externe avec ledit au moins un espace sous la forme d'une découpe (7) ouvert au niveau de l'enveloppe externe du noyau (2) le long d'une longueur de ladite au moins une paire d'éléments abrasifs (6), un trou (8) coaxial avec l'axe et s'étendant à une distance prédéfinie de l'extrémité axiale du noyau (2) occupée par les éléments abrasifs (6), et dans lequel ledit au moins un espace sous la forme d'une découpe (7) est en communication fluidique avec le trou (8) dans le noyau (2), **caractérisé en ce qu'**il comprend une section (9), s'étendant radialement directement dans le noyau (2) entre le trou et ledit au moins un espace sous la forme d'une découpe (7), à travers laquelle un fluide de refroidissement passe pour transporter le fluide de refroidissement amené à travers le trou (8) sur les éléments abrasifs (6) au niveau des surfaces de la pièce à usiner.

2. Outil selon la revendication 1, dans lequel ledit au moins un espace sous la forme d'une découpe (2) s'étend axialement dans le noyau (2) le long d'au moins une partie de la longueur axiale dudit noyau pourvu desdits éléments abrasifs (6).

3. Outil selon la revendication 1 ou 2, dans lequel entre chaque paire d'éléments abrasifs (6) adjacents l'un à l'autre, un espace respectif sous la forme d'une découpe (7) est prévu, chacun desdits espaces sous la forme d'une découpe (7) s'étendant radialement dans ledit noyau (2) à une distance prédéfinie dudit axe et axialement sur au moins une longueur du noyau pourvu desdits éléments abrasifs (6).

4. Outil selon la revendication 3, dans lequel lesdits espaces sous la forme d'une découpe sont ouverts au niveau de l'enveloppe externe dudit noyau.

5. Outil selon la revendication 1, dans lequel l'extension longitudinale, le long dudit axe (X), de chaque section (9) formant un passage traversant est prédéfinie conformément à la profondeur axiale sélectionnée pour ledit trou (8) à l'intérieur du noyau (2), chaque section (9) étant de ce fait formée par l'intersection du trou (8) avec l'espace correspondant sous la forme d'une découpe (7).

6. Outil selon l'une quelconque des revendications 3 à 5, dans lequel chacun desdits espaces sous la forme d'une découpe (7) est limité par une paire de surfaces plates (7a, 7b), parallèles et se faisant face mutuellement à une courte distance.

7. Outil selon l'une des revendications 3 à 6, dans lequel trois espaces respectifs sous la forme d'une découpe (7) agencés dans le noyau (2) avec un pas angulaire régulier de 120° sont prévus.

8. Outil selon l'une des revendications précédentes, dans lequel lesdits éléments abrasifs (6) comprennent des parties de secteurs annulaires de matériau abrasif fixées à l'enveloppe externe dudit noyau (2).

9. Outil selon l'une des revendications précédentes, comprenant des moyens de fixation (4, 5) à un porte-outil respectif.
